# EUROPÄISCHE PATENTSCHRIFT

(11) **EP 1 065 172 B1**
(45) Veröffentlichungstag und Bekanntmachung des Hinweises auf die Patenterteilung: **14.11.2001**
(21) Anmeldenummer: 00106996.2
(22) Anmeldetag: 01.04.2000
(51) Int. Cl.: C02F 1/72

(54) **Verfahren zur Aufbereitung von Abwässern**
Method for treating waste waters
Procédé pour traiter des eaux usées

(30) Priorität: 04.06.1999 DE 19925534
(43) Veröffentlichungstag der Anmeldung: 03.01.2001
(73) Patentinhaber: Degussa AG, 40474 Düsseldorf (DE)
(72) Erfinder: Finkeldei, Caspar-Heinrich, Dr., 63739 Aschaffenburg (DE); Preuss, Andrea, Dr., 63456 Hanau (DE); Woyciechowski, Matthias, Dr., 63505 Langenselbold (DE); Hasenzahl, Steffen, Dr., 63477 Maintal (DE)

(56) Entgegenhaltungen:
- EP-A- 0 257 983

## Beschreibung

Die Erfindung betrifft ein Verfahren zur Aufbereitung von Abwässern.

Zur Abwasserreinigung werden die unterschiedlichsten Verfahren und Verfahrenskombinationen eingesetzt, wie zum Beispiel chemisch-physikalische Verfahren, wie Fällung und Flockung, oder adsorptive Verfahren, zum Beispiel mit Aktivkohle, oder Beseitigung von Schadstoffen durch biologischen Abbau oder Oxidation von Schadstoffen mit unterschiedlichen Methoden.

Bekannt ist die oxidative Abwasserbehandlung mit sauerstoffhaltigen Gasen unter Verwendung von titan-, silicium- oder zirkonhaltigen Mischoxidkatalysatoren bei hohen Temperaturen und unter Druck (EP 0 257 983 A).

Um die Abwasserbehandlung unter Umgebungsbedingungen durchführen zu können, werden in vielen Fällen für die Schadstoffoxidation Verbindungen eingesetzt, die Hydroxylradikale bilden, so zum Beispiel Wasserstoffperoxid. Häufig ist allerdings Wasserstoffperoxid alleine nicht reaktiv genug. Es muß entsprechend aktiviert werden.

Zur Aktivierung kann zum Beispiel UV-Licht eingesetzt werden. UV-Licht bewirkt eine verstärkte Bildung von Hydroxylradikalen aus Wasserstoffperoxid. Diese Bildung von Hydroxylradikalen wird auch durch gelöste Eisensalze katalysiert. Die Kombination von Wasserstoffperoxid und gelösten Eisen-(II)-salzen bezeichnet man als Fentons Reagenz (O. Specht, I. Wurdack, D. Wabner "Mehrstufige Pilotanlage zur oxidativen Abwasserbehandlung nach dem Fenton-Verfahren (H₂O₂/Fe-Katalysator), Chemie Ingenieur Technik 9/1995).

Der Einsatz von Fentons Reagenz weist jedoch gravierende Nachteile auf (I. Wurdack, C. Höfl, G. Sigl, O. Specht, D. Wabner "Oxidativer Abbau von AOX und CSB in realen Abwässern: Vergleich verschiedener "Advanced Oxidation Processes", 3. GVC-Kongreß "Verfahrenstechnik der Abwasser- und Schlammbehandlung", VDI-Verlag 1996): Die Reaktion läuft nur bei sehr sauren pH-Werten zwischen 2 und 3 ab. Das Abwasser muß also zunächst angesäuert und nach der Oxidation mit Fentons Reagenz wieder neutralisiert werden, bevor es in eine Kläranlage oder einen Vorfluter abgegeben werden kann. Dadurch kommt es zu einer erheblichen Aufsalzung des behandelten Abwassers und es entstehen erhebliche Mengen eines schwerlöslichen Eisenhydroxid-Niederschlags, der abgetrennt werden muß. Außerdem kommt es während dieser Reaktion zu einem hohen unspezifischen H₂O₂-Verbrauch.

Aufgabe der Erfindung war es, die genannten Nachteile von Fentons Reagenz zu umgehen. Die Aufsalzung des Abwassers soll vermieden und der unspezifische H₂O₂-Verbrauch möglichst weit eingeschränkt werden.

Gegenstand der Erfindung ist ein Verfahren zur Aufbereitung von Abwässern, welches dadurch gekennzeichnet ist, daß man die Abwässer mit Hydroxylradikalbildnern, wie zum Beispiel Wasserstoffperoxid, in Gegenwart von titanhaltigen Silikaten als Katalysator bei einer Temperatur zwischen dem Gefrier- und dem Sildepunkt von Wasser bei Atmosphärendruck behandelt.

In einer Ausführungsform der Erfindung kann-man als Katalysator Metall-Silikate einsetzen.

Weiterhin kann man als Katalysator ein titanhaltiges Metall-Silikat aus der Gruppe Titansilikalit TS1, Titansilikalit TS2, titanhaltiger ZSM5, titanhaltiger DAY und/oder titanhaltiger Beta-Zeolith einsetzen.

Kristalline Metallsilikate mit regelmäßigen Mikro- oder Mesoporen stellen teilweise sehr wirksame Katalysatoren für die Synthese verschiedener Produkte dar. Insbesondere mikroporöse Produkte der allgemeinen Zusammensetzung (SiO2)1-x(TiO2)x, in denen Titanatome einen Teil der Siliciumatome im Kristallgitter ersetzen, haben hierbei technische Bedeutung als Oxidationskatalysatoren erlangt. Zu nennen sind hier insbesondere Titansilicalit-1 (US Patent 4,410,501) und Titansilicalit-2 (J.S. Reddy, S. Sivasanker, P. Ratnasamy, J. Mol. Catal. 71 (1992) 373). So ist zum Beispiel die Umsetzung von Olefinen mit Wasserstoffperoxid zu Epoxiden (EP 100 119), die Umsetzung von Aromaten mit Wasserstoffperoxid zu Hydroxyaromaten (DE 31 35 559), die Umsetzung von aliphatischen Kohlenwasserstoffen mit Wasserstoffperoxid zu Alkoholen und Ketonen (EP 376 453) und die Umsetzung von Cyclohexanon mit Wasserstoffperoxid und Ammoniak zu Cyclohexanonoxim (EP 208 311) bekannt.

Erfindungsgemäß können mikro- oder mesoporöse, titanhaltige Metallsilikate, besonders bevorzugt Titansilikalit 1, in Gegenwart von Hydroxylradikalbildnern, z.B. Wasserstoffperoxid, für die Oxidation von Abwasserinhaltsstoffen unter milden Reaktionsbedingungen z.B. bei neutralen pH-Werten und Raumtemperatur als Katalysator eingesetzt werden.

Abwässer, die mit dem erfindungsgemäßen Verfahren behandelt werden können, sind solche, die oxidierbare organische oder auch anorganische Verbindungen enthalten. Besonders vorteilhaft ist das erfindungsgemäße Verfahren dann, wenn die Abwasserinhaltsstoffe nicht leicht biologisch abbaubar sind. Behandelbar sind also neben kommunalen Abwässern auch Abwässer aus der chemischen und pharmazeutischen Industrie, aus der metallverarbeitenden und der Erdölindustrie, mit organischen Stoffen verunreinigte Grundwässer sowie Abwässer aus Abluftwäschern. Bei den behandelbaren Schadstoffen handelt es sich vornehmlich um unterschiedlich substituierte aliphatische und aromatische organische Verbindungen wie z.B. schwefelhaltige organische Substanzen mit Mercapto- oder Sulfo-Funktionen, Carbonsäuren und Amide, Amine, aliphatische Kohlenwasserstoffe, ein- und mehrkernige aromatische Verbindungen, chlorierte Aliphaten und Aromaten, aliphatische Homo- und Heterozyklen.

Mit dem erfindungsgemäßen Verfahren kann eine Teiloxidation der Schadstoffe in den Abwässern erreicht werden. Durch die Teiloxidation kann die biologische Abbaubarkeit der Schadstoffe erhöht werden.

Da in vielen Fällen, insbesondere bei nicht biologisch abbaubaren Abwässern die vorhandenen Schadstoffe nicht vollständig bekannt und auch nicht identifizierbar.sind, werden zur Charakterisierung der Abwässer Summenparameter, wie der Chemische Sauerstoffbedarf (CSB, bestimmt nach DIN ISO 6060 bzw. DIN 38409/41) oder der gesamte organische Kohlenstoff (total organic carbon, TOC, nach EN 1484) herangezogen. Das erfindungsgemäße Verfahren hat daher zunächst eine gewisse Reduktion des enthaltenen CSB oder des TOC sowie auch eine Verbesserung der biologischen Abbaubarkeit zum Ziel, wie sie in Standardtests nach DIN EN 29 888 (Zahn-Wellens-Verfahren) gemessen wird. Durch die Teiloxidation von enthaltenen Schadstoffen kann außerdem die Hemmung der Nitrifikation herabgesetzt oder aufgehoben werden, die nach einer Standardmethode der Degussa SOP UT-001 bestimmt wird.

Die Konzentrationen der Abwasserinhaltsstoffe können im Bereich von wenigen mg CSB/l bis zu 100 g CSB/l, vornehmlich zwischen 0,1 und 20 g CSB/l liegen.

Die als Katalysatoren eingesetzten titanhaltigen Silikate können pulverförmig in Konzentrationen zwischen 0,05 und 100 g/l, bevorzugt zwischen 0,5 und 10 g/l, und/oder als Formkörper wie z.B. Granulate, Extrudate oder Kugeln eingesetzt werden. Besonders geeignet ist Titansilicalit-1 als Katalysator. Das Katalysatorpulver kann zwischen 1 und 5 % (w/w) Titandioxid, vorzugsweise zwischen 2 und 3% enthalten.

Die Reaktion kann bei vergleichsweise milden Reaktionsbedingungen. Der pH-Wert liegt zwischen pH 2 und pH 9, bevorzugt zwischen pH 6,0 und pH 8,0 liegen.

Das Verfahren wird bei einer Temperatur zwischen dem Gefrier- und dem Siedepunkt ablaufen, bevorzugt im Temperaturbereich zwischen 15 und 40°C durchgeführt.

Die Katalyse kann in einem Suspensionsreaktor mit oder ohne vollständiger Abtrennung des Katalysators durchgeführt werden. Der Katalysator kann nach Abschluß der Reaktion sedimentiert werden, dabei werden geringe Katalysatorverluste im Ablauf des behandelten Abwassers in Kauf genommen.

In einer anderen Ausführungsform kann man den Suspensionsreaktor mit einer Crossflow-Filtration, bei der man die Suspension an einer porösen Fläche/ Membran vorbeiströmen läßt und zwischen Überström- und Filtratseite eine Druckdifferenz anlegt, so daß ein Teil der Lösung die Fläche/Membran quer zur Fließrichtung durchströmt (Patentanmeldung DE 196 17 729.4), kombinieren.

Titanhaltige Silikate können in einer weiteren Ausführungsform der Erfindung als Formkörper in einem Festbettreaktor eingesetzt werden, der kontinuierlich mit dem zu behandelnden Abwasser in Gegenwart von H2O2 durchströmt wird. Als Formkörper können z.B. 2 mm Vollzylinder mit 20% Bindemittel (z.B. Kieselsol) eingesetzt werden.

### Beispiele:

### 1. Beispiel:

In einem beheizten und gerührten Becherglas werden 500 ml eines Modellabwassers mit 2,1 g/l Phenol vorgelegt, auf die Starttemperatur (siehe unten, 30°C oder 80°C) erwärmt und dann 6,25 g Titansilicalit und 12,75 g 50%ige H2O2-Lösung unmittelbar nacheinander zugegeben. Als Blindprobe dient ein Ansatz ohne Katalysator. Der pH-Wert des Modellabwassers liegt bei pH 7. Das Modellabwasser ist nicht gepuffert. Analysiert wird der Rest-CSB nach verschiedenen Reaktionszeiten (<= 120 min).

Mit Titänsilikalit kann im Vergleich zur Blindprobe mit nur H₂O₂ eine deutliche Reduktion des enthaltenen CSB unter sehr milden Reaktionsbedingungen erreicht werden. Eine entsprechende oxidative Umsetzung mit Hilfe von Eisensalzen als Katalysator (Fentons Reagenz) würde einen stark sauren pH-Wert erfordern. Eine Temperaturerhöhung auf 80°C erbringt eine Verkürzung der Reaktionszeit auf unter ein Viertel.

Im Lauf der Reaktion kommt es zu einer Abnahme des pH-Werts, was auf die Bildung organischer Säuren durch die Oxidation hindeutet.

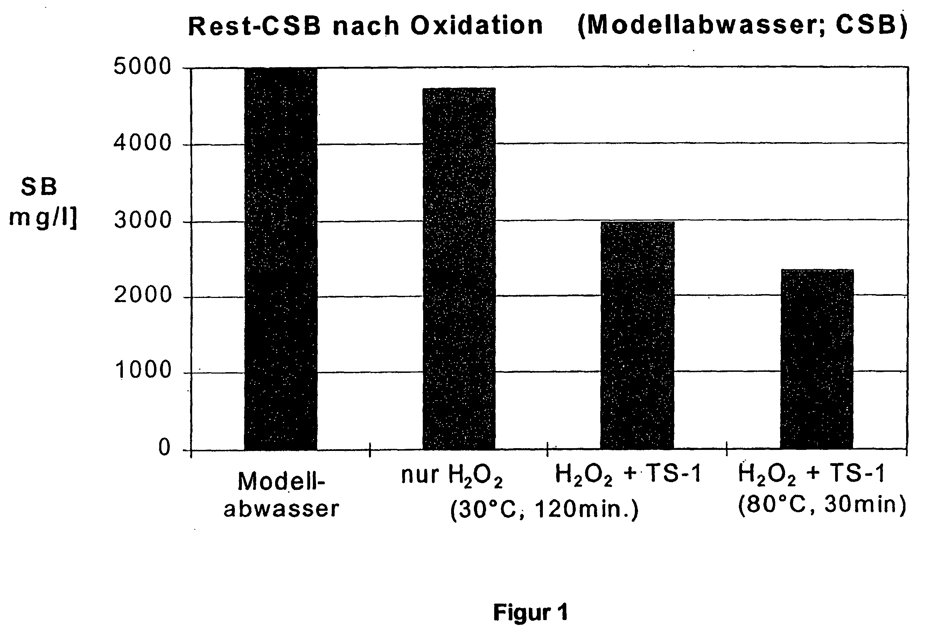

Die Ergebnisse des Beispiels 1 sind in der Figur 1 graphisch dargestellt.

### 2. Beispiel:

In einem beheizten und gerührten Becherglas werden 500 ml eines Modellabwassers mit 2,4 g/l Ethanol vorgelegt, auf 30°C erwärmt und dann 6,25 g Titansilikalit und 12,75 g 50%ige H₂O₂-Lösung unmittelbar nacheinander zugegeben. Der pH-Wert des Modellabwassers liegt bei pH 8,0. Das Modellabwasser ist nicht gepuffert. Analysiert wird der Rest-CSB nach 120 min. Zum Vergleich wird im gleichen Versuchssystem eine Oxidation der Modellschadstoffe mit Fenton's Reagenz bei pH 2,5 durchgeführt.

Mit Fenton's Reagenz wird nach 120 min. eine Reduktion des CSB um 54% gegenüber der Ausgangskonzentration beobachtet. Mit Titansilikalit wird unter wesentlich milderen Reaktionsbedingungen, bei pH 8 ein Abbaugrad von 40% erreicht. Damit wird die bei Fenton's Reagenz unvermeidliche Aufsalzung des Abwassers vermieden.

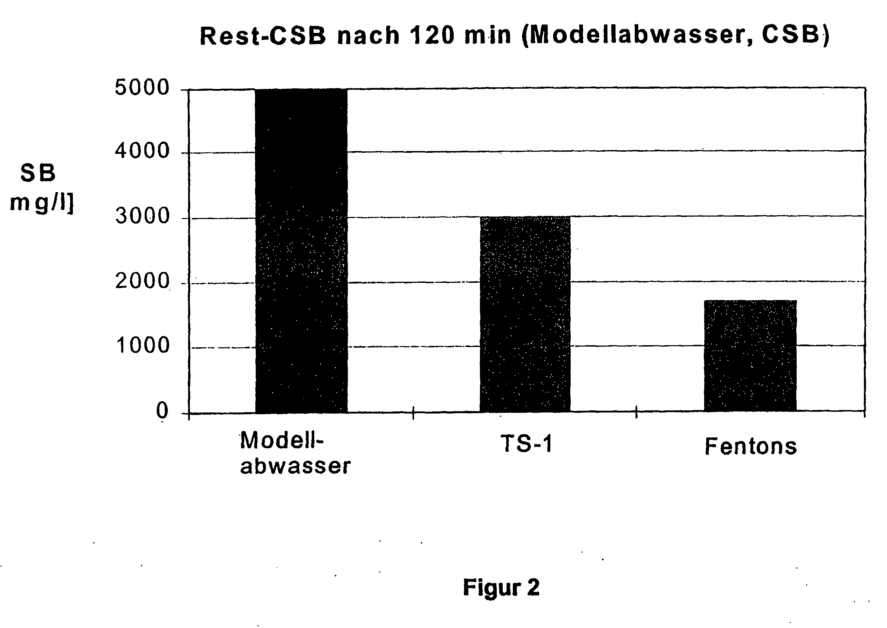

Die Ergebnisse des Beispiels 2 sind in der Figur 2 graphisch dargestellt.

### 3. Beispiel:

Eine Säule mit 100 ml Katalysatorfüllung als Formkörper (extrudierte Vollzylinder Titansilikalit, ⌀ 2mm, Länge 3 mm, mit 20% Siliciumdioxid als Bindemittel, 1 h bei 550°C calciniert) wird kontinuierlich mit einem auf pH 6,0 eingestellten realen Abwasserstrom von 100 ml/h, der vorher mit 5-10 ml 30% iger H₂O₂-Lösung versetzt wurde, beschickt. Der Säulenablauf wird zur Aufrechterhaltung der Katalysatorbenetzung mit ca. 80 bis 100 ml/h zum Kopf zurückgeführt. Aus dem Säulenablauf wird die Zuflußmenge (100 ml/h) abgeführt.

Es wird eine Erhöhung der CSB-Meßwerte um etwa den Faktor 8 beobachtet. Das liegt vermutlich daran, daß die Inhaltsstoffe oxidiert beziehungsweise teilweise oxidiert werden, so daß sie wahrscheinlich einer anschließenden CSB-Messung erst quantitativ zugänglich sind. Im Originalabwasser ist dies vermutlich nicht der Fall. Das heißt: Die im Originalabwasser gemessenen CSB-Werte sind vermutlich zu gering, wodurch die Zunahme der CSB-Werte erklärt werden könnte.

Die Toxizität gegenüber einer nitrifizierenden Biomasse (Nitrifikationshemmung) wird durch die erfindungsgemäße oxidative Behandlung quantitativ beseitigt (nachgewiesen im Nitrifikationshemmtest nach SOP UT-001). Gleichzeitig verbessert sich die grundsätzliche biologische Abbaubarkeit im Zahn-Wellens-Testverfahren.

Andere mit diesem Realabwasser getestete Behandlungverfahren, wie zum Beispiel eine alkalische Druckhydrolyse oder die Oxidation mit Fenton's Reagenz, zeigen weder eine Erhöhung der CSB-Meßwerte noch eine signifikante Verringerung der Toxizität im Hinblick auf die Nitrifikationseigenschaften von Biomassen.

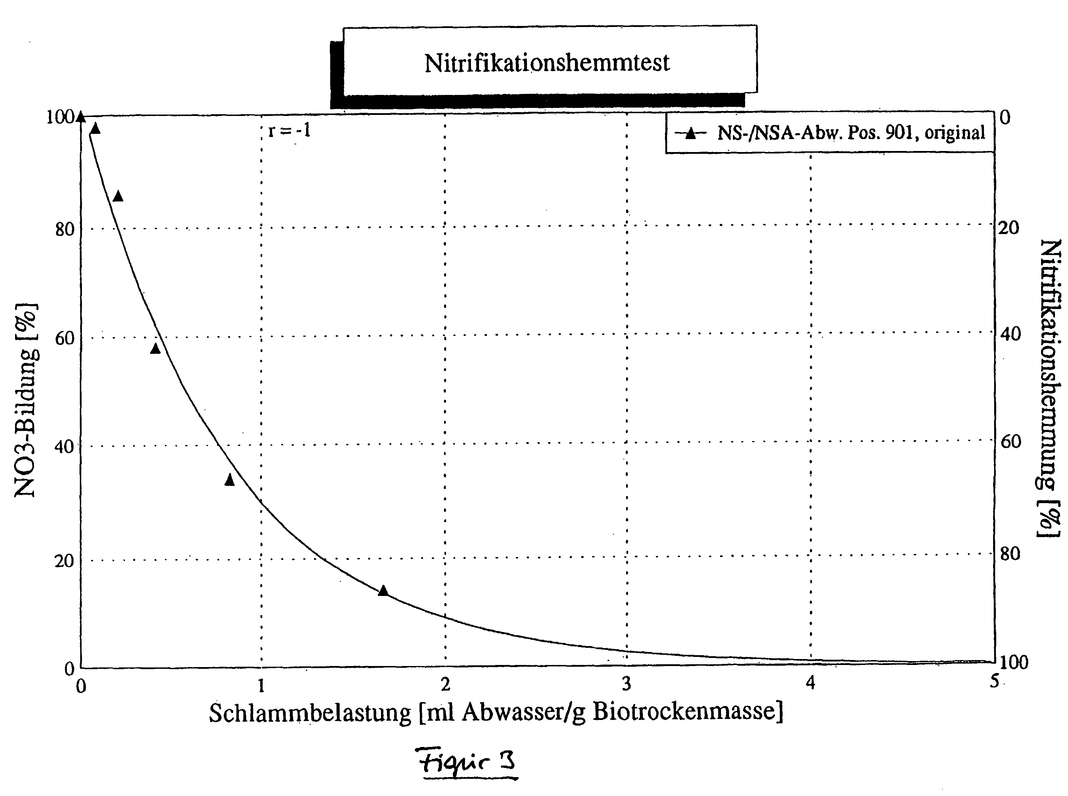

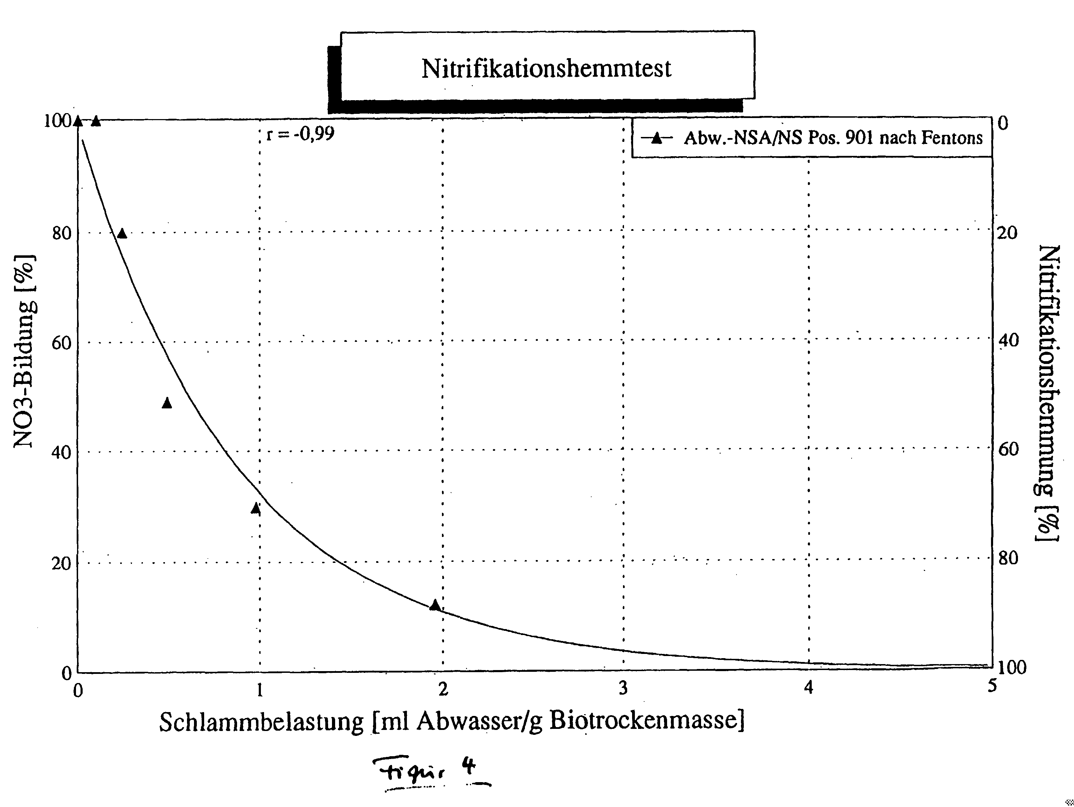

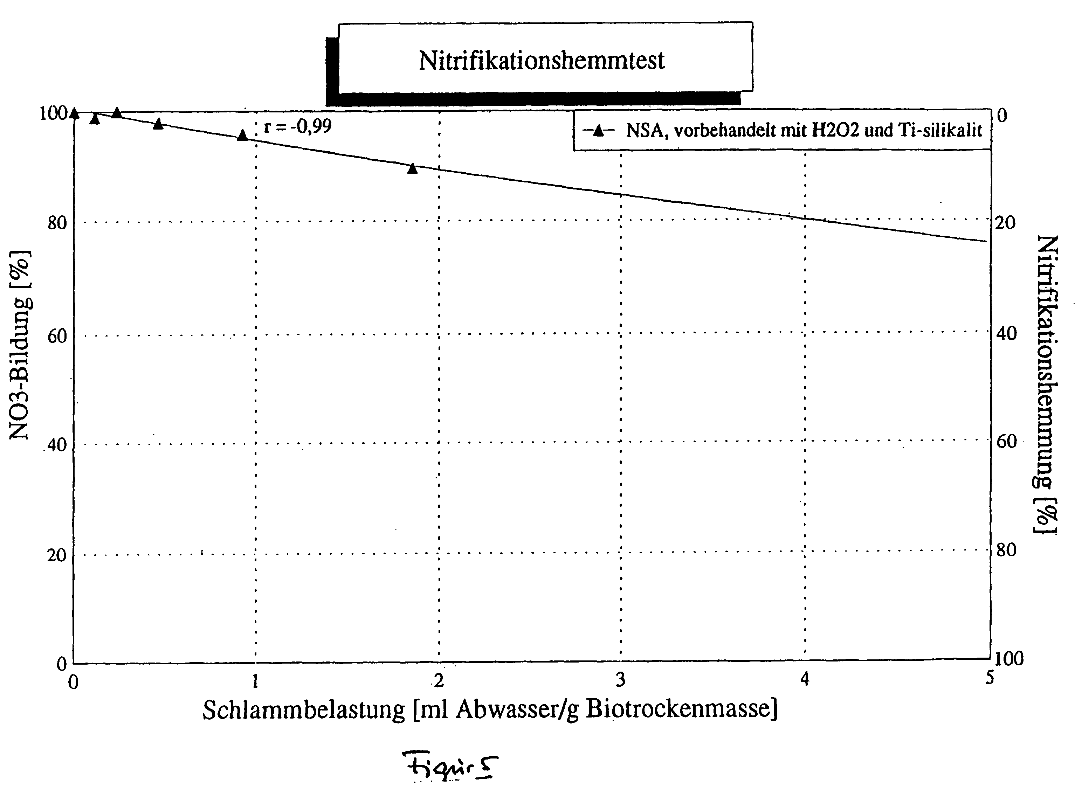

Die Ergebnisse zur Beseitigung der Nitrifikationshemmung sind in den Figuren 3, 4, und 5 graphisch dargestellt.

## Patentansprüche

1. Verfahren zur Aufbereitung von Abwässern, **dadurch gekennzeichnet, daß** man die Abwässer mit Hydroxylbildnern, wie zum Beispiel Wasserstoffperoxid, in Gegenwart von titanhaltigen Silikaten als Katalysator bei einer Temperatur zwischen dem Gefrier- und dem Sildepunkt von Wasser bei Atmosphärendruck behandelt.

2. Verfahren nach Anspruch 1, **dadurch gekennzeichnet**, das man als Katalysator mindestens ein titanhaltiges Metallsilikat aus der Gruppe Titansilikalit TS1, Titansilikalit TS 2, titanhaltiger ZSM-5, titanhaltiger DAY und/oder titanhaltiger Beta-Zeolith einsetzt.

## Claims

1. A process for treating waste waters, **characterised in that** the waste water is treated with hydroxyl producers such as, for example, hydrogen peroxide, in the presence of titanium-containing silicates as catalyst at a temperature between the freezing point and the boiling point of water at atmospheric pressure.

2. A process according to Claim 1, **characterised in that** at least one titanium-containing metal silicate from the group titanium silicalite TS1, titanium silicalite TS2, titanium-containing ZSM-5, titanium-containing DAY and/or titanium-containing beta-zeolite is used as catalyst.

## Revendications

1. Procédé de traitement des eaux usées,
**caractérisé en ce qu'**
on traite les eaux usées avec des agents formateurs d'hydroxyle comme par exemple le peroxyde d'hydrogène en présence de silicates contenant du titane comme catalyseur, jusqu'à une température comprise entre le point de congélation et le point d'ébullition de l'eau à la pression atmosphérique.

2. Procédé selon la revendication 1,
caractérisé en de qu'
on met en oeuvre au moins un silicate métallique contenant du titane choisi dans le groupe du titane silicalite TS1, du titane silicalite TS2, du ZSM-5 contenant du titane, du DAY contenant du titane, et/ou de la béta zéolite contenant du titane.
